# EUROPEAN PATENT APPLICATION

(11) **EP 2 913 945 A2**
(43) Date of publication of application: **02.09.2015**
(21) Application number: 13824836.4
(22) Date of filing: 01.08.2013
(51) Int. Cl.: H04H 60/81

(54) **SYSTEM FOR PRESENTING MULTIMEDIA CONTENTS OF OPTIMUM QUALITY TO AN END USER**

(30) Priority: 03.08.2012 RU 2012133242
(71) Applicant: Yaroshenko, Vadim Vitalievich, Moscow 121315 (RU)
(72) Inventor: Yaroshenko, Vadim Vitalievich, Moscow 121315 (RU)
(74) Representative: Smirnov, Alexander
(86) International application number: PCT/RU2013/000666
(87) International publication number: WO 2014/021746

(57) **Abstract**

The multifunctional system for delivery of multimedia content of optimum quality to end user pertains to the area of computer science and can be used to provide the end user with multimedia content, in particular, video content, of optimum quality.

The technical result of the claimed utility model is aimed at creating a multifunctional system for delivery of multimedia content of optimum quality to end user that is configured to determine user device, where the multimedia content will be delivered, and Internet connection speed of the end user.

The multifunctional system for delivery of multimedia content of optimum quality to end user contains multimedia service that includes a memory area containing user profiles, billing system, and metadata. The multimedia service is connected with end user devices and multimedia servers array containing multimedia content elements via the Internet.

## Description

The utility model pertains to the area of computer science and can be used to deliver multimedia content, such as optimum quality video content, to user.

Digital multimedia content, such as digital video, can be consumed by user by means of a wide range of devices and platforms: PCs, personal digital assistants, portable and fixed digital multimedia players, game consoles, mobile phones, smartphones, smart TVs, etc.

There exist many various systems for providing multimedia content to end user.

A multimedia content purchase system is known which is described in the RF Patent No 2449353 "Linking devices to the service of shared use of multimedia" dated of 10.20.2010. This known Multimedia Content Purchase System contains: the memory area associated with the multimedia service; the multimedia server connected to the multimedia service via the data transfer network; the portable computing device associated with user; and processor associated with the portable computing device and executing machine commands in order to: establish connection with the multimedia server, when the multimedia server and the portable computing device are located in the predefined physical proximity area; authenticate the multimedia server and the user with respect to the authenticated multimedia server; transmit criteria of the digital content distribution; receive advertisement copies of one or more multimedia content elements and associated metadata; purchase at least one of the above mentioned multimedia content elements, if the portable computing device is located outside of the above mentioned physical proximity area.

However, this known system does not ensure the delivery of the optimum quality multimedia content to the end user.

The technical result of the claimed utility model is aimed at creating a multifunctional system for delivery of the optimum quality multimedia content, both unencrypted and encrypted with Digital Rights Management (DRM) software or other algorithms, to the end user using all existing data transfer technologies, including peer-to-peer file exchange networks (P2P), and allows viewing the content while loading or in real time, and identifying the type and location of the end user device where the multimedia content should be delivered, as well as the Internet connection speed of the end user.

The mentioned technical result is achieved due to the fact that the multifunctional system for delivery of the optimum quality multimedia content to end user includes an array of multimedia servers, each of which contains a memory area storing multimedia content elements, as well as the multimedia service containing a memory area storing user profiles, billing system and metadata associated with the multimedia content elements, and multimedia servers of the array are linked to the multimedia service via Internet; the multimedia service allows providing end users with access to the multimedia content and delivering multimedia content elements upon the end user request; the multimedia service allows identifying the type and location of the end user device where the multimedia content element should be delivered, and allows determining the Internet connection speed of the end user.

The multifunctional system for delivery of the multimedia content of optimum quality to end user allows providing the optimum quality multimedia content, both unencrypted and encrypted with Digital Rights Management (DRM) software or other algorithms, to the end user using all existing data transfer technologies, including peer-to-peer file exchange networks, for all device types which support viewing the content, due to determination of the end user device type and using the required number of video profiles for digital video playback that cover the most frequent display resolutions, which allows to offer the most suitable option for the end user device screen, and ensures the optimum display quality at low data transfer rates for all platforms and devices, such as smartphone, tablet PC, laptop, desktop monitor, or TV screen, etc.

The multimedia service allows providing multimedia content to end user using the OTT technology that enables delivery of encoded digital images of optimum quality even in case of data transfer rate drop.

The multimedia service is configured to provide the end user with optimum quality multimedia content, both unencrypted and encrypted with Digital Rights Management (DRM) software or other algorithms.

The multimedia service is configured to insert advertisements into elements of the multimedia content, both unencrypted or encrypted with Digital Rights Management (DRM) software or other algorithms, to distribute advertisements by regions, as well as to target the target audience by age groups and gender using personal data obtained from user profiles.

The multimedia service is configured to broadcast digital TV with any resolution, including Full HD (1920x1080), and all formats, including 3D, in real time or in archive view mode.

The multimedia service is configured to automatically switch the multimedia content display in real time from one end user device to another with optimum quality.

The multimedia service is configured to estimate the waiting time before viewing becomes comfortable, if user selects the view quality independently, and to automatically warn the user about the waiting time; if this waiting time exceeds the predefined value, the service provides the user with information on the waiting time at lower view quality in form of quick links allowing the user to switch to more appropriate options, or to enter the automatic mode.

The multimedia service is configured to automatically switch multimedia content between 3D and 2D modes.

The multimedia service is configured to navigate the user interface and to manage multimedia content viewing settings (volume, video rewind, etc.) using smartphone, tablet PC, or PC as the remote control.

The multimedia service is configured to automatically or manually adjust the aspect ratio of the displayed multimedia content, if it doesn't match the corresponding device aspect ratio, supporting smooth scale adjustment in vertical and horizontal direction, independently or proportionally.

The multimedia service is configured to support touch screen functions, such as multi-touch, volume adjustment with vertical slide, movie scrubbing with horizontal slide, etc.

The multimedia service is configured to provide the end user with multimedia content, such as Full HD (1920x1080p), 3D, and Full HD 3D (1920x1080p), both at standard and low data transfer rates.

The multimedia service is configured to support bitwise progressive download of multimedia content to the buffer of arbitrary size limited by technical parameters of operational system or device used by the end user, which allows preventing "hanging up" during multimedia content viewing in case of Internet connection interruptions, as well as "smoothening" of the bit rate peaks when they exceed the average mean data transfer rate during the playback of the multimedia content, both unencrypted and encrypted with Digital Rights Management (DRM) software or other algorithms.

The multimedia service is configured to determine availability and workload of servers, their proximity to the end user, and to prioritize them by these criteria, as well as to support load balancing between multimedia servers, wherein the multimedia service identifies the optimal server in terms of location, availability and minimum workload, from which the multimedia content is delivered to the end user.

The multimedia service is configured to provide the end user with optimum quality multimedia content, both unencrypted and encrypted with Digital Rights Management (DRM) software or other algorithms, and to insert advertisements, using torrent clients, by means of installing one or several torrent clients on multimedia servers.

Upon reception of the end user request for access to multimedia content elements, the system contacts the tracker that returns the list of IP addresses of other active torrent clients where the necessary multimedia content data units are stored; unlike the standard torrent client, where units are loaded in arbitrary order, in this case the units of multimedia content elements are loaded in sequence, starting with the first unit from the beginning. Upon reception of first units, the system determines the loading rate for all torrent clients, ranks them by the loading rate, and selects the torrent clients that can provide the loading rate required to view the content in real time. After that, multimedia content elements are progressively downloaded unit by unit using these torrent clients. Download of units of multimedia content elements from other torrent clients with lower loading rate is then carried out in arbitrary order. After the subsequent unit is downloaded, the tracker is checked for torrent client changes, for availability of subsequent units of multimedia content elements for download, and the ranking by the download rate is adjusted. After download of each unit, the system verifies the checksum. If the checksum is incorrect, the unit is downloaded again.

The multimedia service can use CPU and video card memory of the end user device.

The multimedia service is configured to create bookmarks and support bookmark navigation when viewing multimedia content elements.

The multimedia service is equipped with the dynamic preview function available when viewing multimedia content elements.

The multimedia service is configured to update software of each end user device, as well as software included into the multimedia service and used by the end user through the Internet.

The metadata describe multimedia content elements and include, e.g., information related with movie, album, game software, director, actor, performer, title, name, genre, movie length, etc.

The multimedia content elements include, at least, audio, or video, or static images, or archive, or list of multimedia content elements, and every multimedia content element has a digital rights management policy associated with it.

User profiles include the information about user subscription on multimedia service, service considering the digital rights management policy associated with them, and end user personal data.

Digital rights management policy includes determination of end user access rights for the corresponding multimedia content element (single or multiple view, leasing, purchase), and time period during which the end user is granted access to this element.

The multimedia content elements are provided the user based on the associated digital rights management policy.

The multimedia service contains user interface with extended functionality that can be configured for each end user device, that is: changing colors or design of the user interface (completely or partially), selecting the required number of the user interface sections to be displayed on each end user device.

The user interface is configured to use the "artificial intellect" to implement the voice-activated control.

The user interface is configured to use the "artificial intellect" to implement advanced functions of the search engine with smart voice assistant.

The user interface is configured to group arbitrary number of users basing on "invitation" of one of them, in order to simultaneously view the same or different multimedia content elements, as well as to organize video conferences between users when viewing the content.

The multimedia service contains billing system that is intended for calculation of service cost for delivery of each multimedia content element for every end user and stores information on all fees and other costs used by the multifunctional system for delivery of multimedia content of optimum quality to end user in order to issue invoices for every end user and to handle mutual settlements with advertisers and multimedia content providers.

The billing system is configured to keep records of advertisement impressions for every advertiser, and to show impression statistics by region or other criteria, and with consideration of target audience targeting.

The claimed utility model is explained with a specific example; however, this example is not the only one possible, but it clearly demonstrates the possibility to reach the declared technical result using the stated set of features.

Examples of the utility model cases are illustrated with the following drawings.

Fig. shows the scheme of the multifunctional system for delivery of multimedia content of optimum quality to end user, where:
- 1: - Multimedia service
- 2: - Multimedia servers array
- 3: - Memory area
- 4: - User profiles
- 5: - Metadata
- 6: - Internet
- 7: - End user devices
- 8: - Billing System

In the preferred embodiment of the utility model, the multifunctional system for delivery of multimedia content of optimum quality to end user contains multimedia service (1) that includes memory area (3) containing user profiles (4), metadata (5), and billing system (8). The multimedia service (1) is connected with End User Devices (7) and multimedia servers array (2) containing multimedia content elements via the Internet.

The workflow of the multifunctional system for delivery of multimedia content of optimum quality to end user is shown below.

The end user requests the Multimedia Service (1) using his/her own Device (2) to provide the required multimedia content element.

The multimedia content elements are stored on Multimedia Servers Array (2) connected with the Multimedia Service (1) via the Internet (6).

Multimedia content element can represent, in particular, audio, video, static images, archive, or multimedia content elements list.

Every multimedia content elements is associated with a digital rights management policy.

Basing on the digital rights management policy, the Multimedia Service (1) verifies, if the end user has the access right for the required multimedia content element.

If the end user has the access for the requested multimedia content element, the Multimedia Service (1) determines the location and type of the End User Device (7), where the multimedia content element should be delivered, as well as Internet (6) connection rate of the end user, and delivers to the end user the multimedia content element of optimum quality corresponding to the End User Device (7) type.

The subject matter expert should understand that the claimed utility model is not limited by the described embodiment.

The claimed utility model is industrially applicable, and the claimed set of features has a new and stable interconnection of functional units, which ensures the achievement of the claimed technical result.

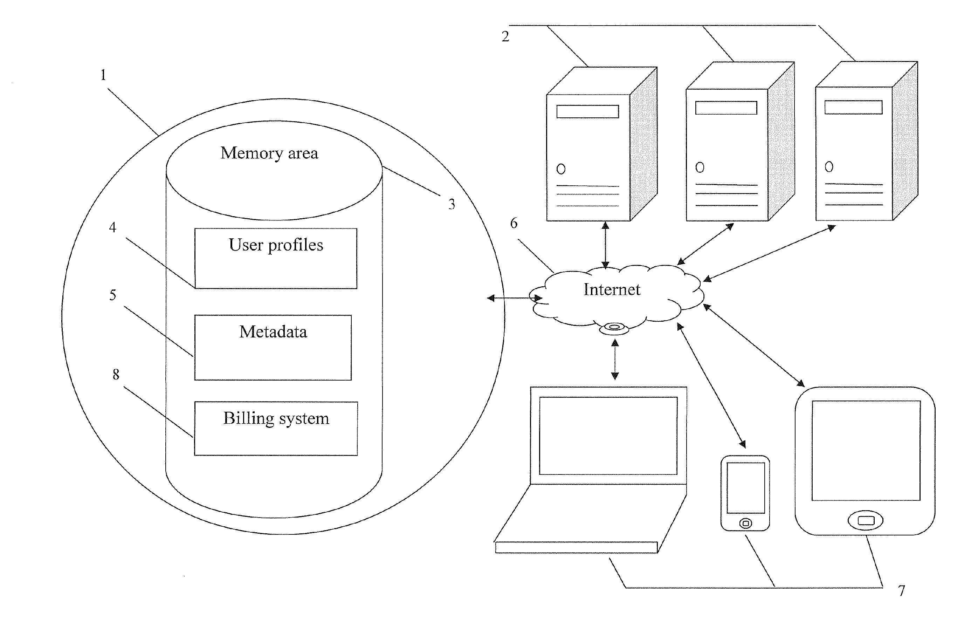

## Claims

1. A multifunctional system for delivery of multimedia content of optimum quality to end user including an array of multimedia servers, each of which includes a memory area storing multimedia content elements, and a multimedia service including a memory area storing user profiles, billing system, and metadata associated with the multimedia content elements, where multimedia servers of the array are linked with the multimedia service via the Internet, and the multimedia service is configured to provide end users with access to multimedia content elements and to deliver multimedia content elements upon request of the end user, where the multimedia service is configured to identify type and location of the end user device where the multimedia content element should be sent, as well as the Internet connection speed of the end user.

2. The system of claim 1 **characterized in that** the multimedia service is configured to deliver multimedia content to the end user with the OTT technology.

3. The system of claim 1 **characterized in that** the multimedia service is configured to deliver optimum quality multimedia content, both unencrypted and encrypted with the Digital Rights Management (DRM) software or other algorithms, to the end user.

4. The system of claim 1 **characterized in that** the multimedia service is configured to broadcast digital TV in real time or in archive view mode.

5. The system of claim 1 **characterized in that** the multimedia service is configured to insert advertisements into the multimedia content elements, both unencrypted and encrypted with the Digital Rights Management (DRM) software or other algorithms.

6. The system of claim 5 **characterized in that** the multimedia service is configured to distribute advertisements by regions, and to target the target audience.

7. The system of claim 1 **characterized in that** the multimedia service is configured to support progressive bitwise download of the multimedia to the buffer of arbitrary size limited by technical parameters of operational system or device of the end user.

8. The system of claim 1 **characterized in that** the multimedia service is configured to automatically switch the multimedia content display in real time from one end user device to another with optimum quality.

9. The system of claim 1 **characterized in that** the multimedia service is configured to automatically switch the multimedia content between 3D/2D modes.

10. The system of claim 1 **characterized in that** the multimedia service is configured to navigate the user interface and to manage multimedia content viewing settings using smartphone, tablet PC, or PC as the remote control.

11. The system of claim 1 **characterized in that** the multimedia service is configured to determine availability and workload of servers, their proximity to the end user, and to prioritize them by these criteria, as well as to support load balancing between multimedia servers, wherein the multimedia service identifies the optimum server in terms of location, availability and minimum workload, from which the multimedia content is delivered to the end user.

12. The system of claim 1 **characterized in that** the billing system is configured to keep records of advertisement impressions for every advertiser, and to show impression statistics by region or other criteria, and with consideration of target audience targeting.

13. The system of claim 1 **characterized in that** the multimedia service contains the user interface that can be configured for every end user device.

14. The system of claim 13 **characterized in that** the user interface if be configured to use the artificial intellect to implement the voice activated control.

15. The system of claim 13 **characterized in that** the user interface is configured to use the artificial intellect to implement advanced functions of the search engine with smart voice assistant.

16. The system of claim 13 **characterized in that** the user interface is configured to group arbitrary number of users, in order to simultaneously view the same or different multimedia content elements, as well as to organize video conferences between users when viewing the content.

17. The system of claim 1 **characterized in that** user profiles include information on user subscription for the multimedia service with consideration of the associated digital rights management policy.

18. The system of claim 17 **characterized in that** the digital rights management policy includes determination of end user access rights for the corresponding multimedia content element, as well as time period during which the end user is granted access to this element.

19. The system of claim 1 **characterized in that** the metadata describe multimedia content elements and include, e.g., information related with movie, album, game software, director, actor, performer, title, name, genre, movie length, etc.

20. The system of claim 1 **characterized in that** multimedia content elements include, at least, audio, or video, or static images, or archive, or list of multimedia content elements, and every multimedia content element has a digital rights management policy associated with it.

21. The system of claim 1 **characterized in that** the multimedia service is configured to adjust the aspect ratio of the displayed multimedia content, if it doesn't match the corresponding device aspect ratio, supporting smooth scale adjustment in vertical and horizontal direction, independently or proportionally.

22. The system of claim 1 **characterized in that** the multimedia service is configured to support touch screen functional, such as multi-touch, volume adjustment with vertical slide, movie scrubbing with horizontal slide, etc.

23. The system of claim 1 **characterized in that** the multimedia service is configured to deliver the optimum quality multimedia content, both unencrypted and encrypted with Digital Rights Management (DRM) software or other algorithms, and to insert advertisements, for torrent clients, by means of installing one or several torrent clients on multimedia service servers.
